# EUROPEAN PATENT SPECIFICATION

(11) **EP 4 460 471 B1**
(45) Date of publication and mention of the grant of the patent: **06.05.2026**
(21) Application number: 22843817.2
(22) Date of filing: 23.12.2022
(51) Int. Cl.: B65G 1/137, G06Q 10/08, G06Q 10/087

(54) **SENSOR SYSTEM AND METHOD FOR MONITORING A STORAGE SPACE**
SENSORSYSTEM UND VERFAHREN ZUR ÜBERWACHUNG EINES SPEICHERPLATZES
SYSTÈME DE CAPTEUR ET PROCÉDÉ DE SURVEILLANCE D'UN ESPACE DE STOCKAGE

(30) Priority: 06.01.2022 US 202263296909 P; 13.01.2022 EP 22151259
(43) Date of publication of application: 13.11.2024
(73) Proprietor: Signify Holding B.V., 5656 AE Eindhoven (NL)
(72) Inventor: MURTHY, Abhishek, 5656 AE Eindhoven (NL); YU, Jin, 5656 AE Eindhoven (NL); ZANG, Yizhou, 5656 AE Eindhoven (NL)
(74) Representative: Verweij, Petronella Daniëlle
(86) International application number: PCT/EP2022/087705
(87) International publication number: WO 2023/131555

(56) References cited:
- WO-A1-2013/067389
- WO-A2-2009/027835
- US-A1- 2016 283 898

## Description

### FIELD OF THE INVENTION

The present invention generally relates to monitoring of storage spaces and/or optimization of such storage spaces. More specifically, the present invention is related to a sensor system and a method for monitoring a storage space comprising items, and a lighting system comprising the sensor system.

### BACKGROUND OF THE INVENTION

Warehouses are a critical part of any supply chain: they act as buffers to store goods between the various stages of a supply chain. Operational efficiency of warehouses is essential to the overall supply chain. Order picking accounts for almost 60 % of the annual operating costs of a warehouse, and over 50 % of those costs are spent on traveling within the warehouse. Thus, minimizing the travel time during order picking is a key strategy to improve the operational efficiency.

The central concept in minimizing travel time is storing the most frequently accessed items in the easiest to reach places. In other words, the most frequently accessed items should be stored closest to the receiving, staging, and shipping areas. The so called "ABC" stock classification ensures that most frequently accessed/valuable items are closest to the staging area, thereby minimizing the travel time. The most frequently accessed items are stored in a (first) zone A, which is usually closest to the staging area. The second-most frequently accessed class of items are stored in a (second) zone B, and so on.

In the state of the art, warehouse management relies on analysis related to ABC to routinely check management system(s) for sub-optimal stocking patterns. However, management systems of this kind are often limited by the quality of data entered into the systems. Furthermore, another significant barrier to ABC analysis is that non-optimal ABC classification is perceived as the main cause of longer order picking times and wasted labor. Moreover, ABC analysis may be time-consuming and data-intensive, and the value of conducting extensive ABC analysis in warehouses is often questioned by warehouse managers. An example of a sensor system for monitoring a storage space comprising a plurality of items can be found on WO2009027835A2.

Hence, it is an object of the present invention to try to overcome at least some of the deficiencies and to provide systems and/or methods which are able to increase the operation efficiency of a storage space such as a warehouse.

### SUMMARY OF THE INVENTION

It is of interest to overcome at least some of the deficiencies of the current warehouse management operations, and to provide systems and/or methods which are able to increase the operation efficiency of a warehouse.

This and other objects are achieved by providing a sensor system and a method having the features in the independent claims. Preferred embodiments are defined in the dependent claims.

Hence, according to a first aspect of the present invention, there is provided a sensor system for monitoring a storage space comprising a plurality of items. The sensor system comprises at least one sensor configured to register occupancy of at least one object in a plurality of zones of the storage space. Each zone of the plurality of zones is associated with a respective hierarchic order, A, B, C. A level of occupancy of the at least one object of a zone of a first hierarchic order, A, is predicted to be higher than a level of occupancy of the at least one object of a zone of a second hierarchic order, B, during a predetermined time interval, wherein the first hierarchic order, A, is higher than the second hierarchic order, B. The sensor system further comprises a processor connected to the at least one sensor. The processor is configured to, via the at least one sensor, determine a level of occupancy of the at least one object in at least two zones, as a function of time, wherein the at least two zones comprise a first zone of the first hierarchic order, A, and a second zone of the second hierarchic order, B. The processor is further configured to compare a first level of occupancy of the at least one object of the first zone with a second level of occupancy of the at least one object of the second zone, during a predetermined time interval. The sensor system further comprises an alarm connected to the processor. The alarm is configured to generate an alarm signal if the first level of occupancy of at least one object of the first zone of the first hierarchic order, A, is lower than the second level of occupancy of at least one object of the second zone of the second hierarchic order, B, whilst the first hierarchic order, A, is higher than the second hierarchic order, B.

According to a second aspect of the present invention, there is provided a method for monitoring a storage space comprising a plurality of items. The method comprises registering occupancy of at least one object in a plurality of zones of the storage space, wherein each zone of the plurality of zones is associated with a respective hierarchic order, A, B, C, wherein a level of occupancy of the at least one object of a first zone of a first hierarchic order, A, is predicted to be higher than a level of occupancy of the at least one object of a zone of a second hierarchic order, B, during a predetermined time interval, wherein the first hierarchic order, A, is higher than the second hierarchic order, B. The method further comprises determining a level of occupancy of the at least one object in at least two zones as a function of time, wherein the at least two zones comprise a first zone of the first hierarchic order, A, and a second zone of the second hierarchic order, B. The method further comprises comparing a first level of occupancy of the at least one object of the first zone with a second level of occupancy of the at least one object of the second zone during a predetermined time interval. The method further comprises generating an alarm signal if the first level of occupancy of at least one object of the first zone of the first hierarchic order, A, is lower than the second level of occupancy of at least one object of the second zone of the second hierarchic order, B, whilst the first hierarchic order, A, is higher than the second hierarchic order, B.

Thus, the present invention is based on the idea of providing a sensor system for monitoring a storage space, such as a warehouse, comprising a plurality of items. Via the sensor(s), occupancy of object(s) may be registered in a plurality of zones of the storage space associated with a respective hierarchic order, A, B, C. Upon comparison of the occupancy of two zones, the processor may determine (detect) an unpredicted or unexpected (abnormal) state in which the first level of occupancy of object(s) of the first zone of the first hierarchic order, A, is lower than the second level of occupancy of object(s) of the second zone of the second hierarchic order, B, whilst the first hierarchic order, A, is higher than the second hierarchic order, B, and the alarm of the system may consequently generate an alarm signal.

The present invention is advantageous in that it may conveniently identify an abnormal or unusual state of the storage space in terms of object occupancy, in case the first level of occupancy of object(s) of the first zone of the first hierarchic order, A, is lower than the second level of occupancy of object(s) of the second zone of the second hierarchic order, B. Consequently, by the alarm generated upon such indication or observation, a storage space observer (e.g. a storage space manager, personnel, or the like) may be made aware of this state or situation.

The present invention is further advantageous in that an unpredicted or unexpected (abnormal or unusual) state of the storage space in terms of object occupancy may be detected to a relatively high degree of automation. In other words, the system of the present invention may require little, or even no manual operation by personnel, staff, etc., in order to provide the indication and observation operation of the system.

The sensor system of the present invention is arranged or configured to monitor a storage space, such as a warehouse, comprising a plurality of items. It will be appreciated that the items may be substantially any kind of items such as goods, products, etc. The sensor system comprises at least one sensor configured to register occupancy of at least one object. The sensor(s) may be any kind of sensor arranged or configured to detect and/or register occupancy and/or motion of object(s) such as e.g. persons, vehicles, etc. The one or more sensors are configured to register occupancy of object(s) in a plurality of zones of the storage space, wherein each zone of the plurality of zones is associated with a respective hierarchic order, A, B, C. Hence, the storage space is divided into a plurality of zones, wherein each zone has a unique hierarchic order, A, B, C. A level of occupancy of the at least one object of a zone of a first hierarchic order, A, is predicted to be higher than a level of occupancy of the at least one object of a zone of a second hierarchic order, B, during a predetermined time interval, wherein the first hierarchic order, A, is higher than the second hierarchic order, B. In other words, a zone of a first hierarchic order, A, is predicted or expected (either upon predetermination and/or computation) to have a level of occupancy of object(s) which is higher than a level of occupancy of object(s) of a zone of a second hierarchic order, B. The sensor system further comprises a processor connected to the at least one sensor. Hence, the processor is configured to receive information from the sensor(s). The processor is configured to, via the at least one sensor, determine a level of occupancy of the at least one object in at least two zones, as a function of time, wherein the at least two zones comprise a first zone of the first hierarchic order, A, and a second zone of the second hierarchic order, B, and to compare a first level of occupancy of the at least one object of the first zone with a second level of occupancy of the at least one object of the second zone, during a predetermined time interval. Hence, based on the information received from the sensor(s), the processor is configured to compare the object occupancy of the first zone with the second zone. The sensor system further comprises an alarm connected to the processor. The alarm is configured to generate an alarm signal if the first level of occupancy of at least one object of the first zone of the first hierarchic order, A, is lower than the second level of occupancy of at least one object of the second zone of the second hierarchic order, B, whilst the first hierarchic order, A, is higher than the second hierarchic order, B. Hence, the alarm is configured to operate based on the comparison of the first and second zones as performed by the processor, and to generate an alarm signal in case of an unexpected or unpredicted case determined by the processor, in which the average first level of occupancy of object(s) of the first zone of the first hierarchic order, A, is lower than the average second level of occupancy of object(s) of the second zone of the second hierarchic order, B.

According to an embodiment of the present invention, the processor may be configured to, via the at least one sensor, identify, for at least one zone of the plurality of zones, at least a first portion of the zone having a level of occupancy of at least one object being below a first threshold, T₁, and at least a second portion of the zone having a level of occupancy of at least one object being above a second threshold, T₂. The processor may further be configured to, via the at least one sensor, indicate, for at least one zone of the plurality of zones, a transfer of at least one item from the at least a first portion of the zone to the at least a second portion of the zone. Hence, based on information received from the sensor(s), the processor may identify first portion(s) of zone(s), wherein the first portion(s) has (have) a level of occupancy of object(s) being below a first threshold, T₁, i.e. being relatively small. First portion(s) of this kind may be denoted "cold spots". Analogously, the processor may identify second portion(s) of zone(s), wherein the second portion(s) has (have) a level of occupancy of object(s) being above a second threshold, T₂, i.e. being relatively high. Second portion(s) of this kind may be denoted "hot spots". Based on this identification, the processor may further be configured to indicate a transfer (i.e. transportation) of item(s) from the first portion(s) to the second portion(s), i.e. from the "cold spot(s)" to the "hot spot(s)". The present embodiment is advantageous in that the system may efficiently detect and/or register (first) zone(s) of relatively low occupancy and (second) zone(s) of relatively high occupancy, and thereby indicate that one or more items could be transferred from the (first) zone(s) to the (second) zone(s). Consequently, the system may hereby indicate a transfer of items from low occupancy zones to high occupancy zones which to an even further extent improves the operation efficiency of the storage space.

According to an embodiment of the present invention, each zone of the plurality of zones may be associated with a respective hierarchic order, A, B, C, based on a predetermined setting of the plurality of zones. Hence, each zone may be associated, set and/or linked with a respective hierarchic order, A, B, C, in a predetermined manner, i.e. in advance. For example, first and second zones may be associated with first and second hierarchic orders, A, B, respectively, if it (in advance) is assumed, predicted and/or expected that the first level of occupancy of object(s) of the first zone is higher than the second level of occupancy of at least one object of the second zone. The present embodiment is advantageous in that a definition of the zones of the storage space with respect to hierarchy may be performed in a convenient manner.

According to an embodiment of the present invention, each zone of the plurality of zones may be associated with a respective hierarchic order, A, B, C, based on the at least one sensor being configured to register occupancy of the at least one object in the plurality of zones of the storage space during a nominal time interval, wherein the processor is configured to, via the at least one sensor, determine a level of occupancy of the at least one object in at least two zones as a function of time, wherein the at least two zones comprise a first zone and a second zone, compare a first level of occupancy of the at least one object of the first zone with a second level of occupancy of the at least one object of the second zone, during the nominal time interval, if the first level of occupancy of the at least one object of the first zone is higher than the second level of occupancy of the at least one object of the second zone, the processor being configured to associate the first zone with a first hierarchic order, A, and associate the second zone with a second hierarchic order, wherein the first hierarchic order, A, is higher than the second hierarchic order, B. In other words, during a nominal time interval, the processor may compare levels of occupancy of object(s) of two or more zones, and associate a first zone with a first (higher) hierarchic order, A, and associate the second zone with a second (lower) hierarchic order, B, in case the first level of occupancy of the object(s) of the first zone is higher than the second level of occupancy of the object(s) of the second zone. Hence, the system, via the processor and sensor(s), is configured to determine (calculate) the hierarchic orders, A, B, C, of the zones, and the present embodiment is advantageous in that a definition of the zones of the storage space with respect to hierarchy may be assumed or predicted to have a high level of accuracy. The present embodiment is advantageous in that the system, via the processor, may conveniently predict the hierarchic orders via sensor data and/or calculations in a convenient manner.

According to an embodiment of the present invention, at least one of the first threshold, T₁, and the second threshold, T₂, may fulfill and -2·σ < T₁< -1.5·σ and 1.5·σ < T₂< 2·σ, respectively, wherein σ is the standard deviation from the mean level of occupancy for at least one zone of the plurality of zones. The present embodiment is advantageous in that the thresholds may be conveniently determined or defined for one or more first portions having a level of occupancy of object(s) being below the first threshold, T₁, and analogously, for one or more second portions having a level of occupancy of object(s) being above the second threshold, T₂, leading to an even more efficient and/or convenient indication of transfer of items from first to second portions, i.e. from "cold spot(s)" to "hot spot(s)". Alternatively, it should be noted that the thresholds may be chosen heuristically and/or be chosen as a function of at least one property of the storage space.

According to an embodiment of the present invention, at least one of the first threshold, T1, and the second threshold, T2, may be set based on at least one property of the storage space. For example, the first threshold, T1, and/or the second threshold, T2, may be dependent on the size, design, etc., of the storage space (warehouse). The present embodiment is advantageous in that the threshold may be conveniently set and/or determined based on the storage space property(ies).

According to an embodiment of the present invention, the processor may be configured to identify, for at least one zone of the plurality of zones, a first cluster of at least two spatially contiguous first portions of the zone, and a second cluster of at least two spatially contiguous second portions of the zone. The processor may further be configured to indicate, for at least one zone of the plurality of zones, a transfer of at least one item from the at least a first portion of the zone to the at least a second portion of the zone as a function of at least one of at least one property of the first cluster, and at least one property of the second cluster. The present embodiment is advantageous in that the sensor system, via the processor, may identify one or more clusters of spatially contiguous portions of zones, e.g. with a relatively high or a relatively low occupancy.

According to an embodiment of the present invention, the at least one sensor may be a passive infra-red sensor, PIR. The present embodiment is advantageous in that the PIR sensor(s) may efficiently register and/or monitor objects in the storage space.

According to an embodiment of the present invention, the at least one object may be a person.

According to an embodiment of the present invention, there is provided a lighting system. The lighting system may comprise at least one lighting device. The lighting system may further comprise a sensor system according to any one of the preceding embodiments, connected to the at least one lighting device. The present embodiment is advantageous in that the sensor system may be arranged within, or adjacent to, a lighting system, such that the lighting system may provide a combination of illumination and monitoring.

According to an embodiment of the present invention, the at least one sensor may be configured to control an operation of the at least one lighting device. The present embodiment is advantageous in that the sensor(s) may provide feedback to the lighting device, which may even further improve the operation of the lighting device(s).

According to an embodiment of the second aspect of the present invention, wherein, if the first level of occupancy of at least one object of the first zone of the first hierarchic order, A, is lower than the second level of occupancy of at least one object of the second zone of the second hierarchic order, B, whilst the first hierarchic order, A, is higher than the second hierarchic order, B, the method may comprise identifying, for at least one zone of the plurality of zones, at least a first portion of the zone having a level of occupancy of at least one object being below a first threshold, T₁, and at least a second portion of the zone having a level of occupancy of at least one object being above a second threshold, T₂. The method may further comprise indicating, for at least one zone of the plurality of zones, a transfer of at least one item from the at least a first portion of the zone to the at least a second portion of the zone.

According to an embodiment of the second aspect of the present invention, each zone of the plurality of zones may be associated with a respective hierarchic order, A, B, C, based on a predetermined setting of the plurality of zones.

According to an embodiment of the second aspect of the present invention, each zone of the plurality of zones may be associated with a respective hierarchic order, A, B, C, based on the steps of registering occupancy of the at least one object in the plurality of zones of the storage space during a nominal time interval, determining a level of occupancy of the at least one object in at least two zones as a function of time, comparing a first level of occupancy of the at least one object of the first zone with a second level of occupancy of the at least one object of the second zone, during the nominal time interval, if the first level of occupancy of the at least one object of a first zone is higher than the second level of occupancy of the at least one object of the second zone, associating the first zone with a first hierarchic order, A, and associating the second zone with a second hierarchic order, wherein the first hierarchic order, A, is higher than the second hierarchic order, B.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Fig. 1 schematically shows a sensor system according to an exemplifying embodiment of the present invention,
Fig. 2 schematically shows a diagram of detected occupancy of object(s) by a sensor system according to an exemplifying embodiment of the present invention,
Fig. 3 schematically shows an indication of transfer of item(s) by a sensor system according to an embodiment of the present invention,
Figs. 4a and 4b schematically show a lighting system comprising a sensor system according to embodiments of the present invention, and
Fig. 5 schematically shows the method for monitoring a storage space comprising a plurality of items according to the second aspect of the present invention,

### DETAILED DESCRIPTION

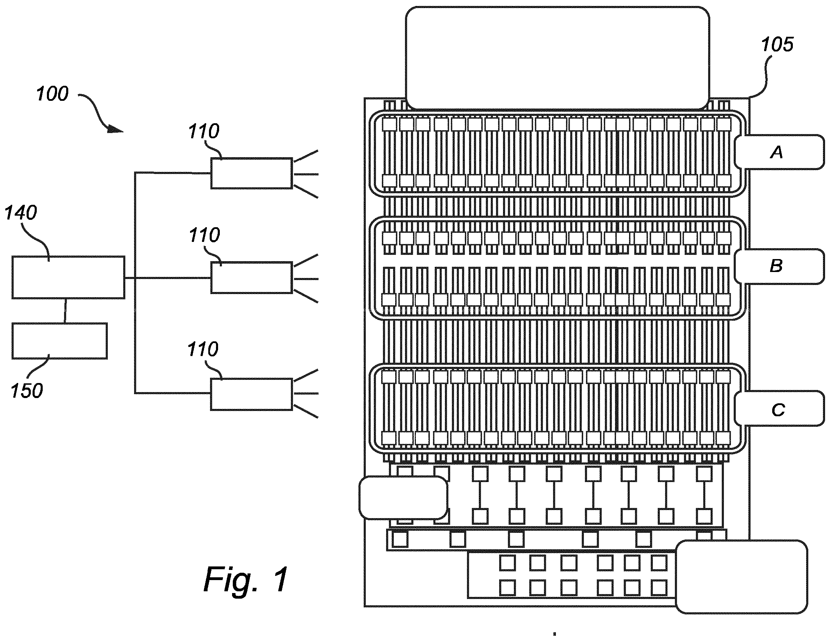

Fig. 1 schematically shows a sensor system 100. The sensor system 100 is arranged or configured to monitor a storage space 105, such as a warehouse, or the like, comprising a plurality of items, such as goods, products, etc. The storage space 105 may comprise storage racks, shelves, etc., for the items. The sensor system 100 comprises at least one sensor 110, which may be any kind of sensor arranged or configured to detect and/or register occupancy of object(s), such as e.g. persons, vehicles, etc. Here, the sensor system 100 is exemplified as comprising three sensors 110, but it should be noted that the sensor system 100 may comprise substantially any number of sensors 100. The one or more sensors 100 are configured to register occupancy of object(s) in a plurality of zones of the storage space 105, wherein each zone of the plurality of zones is associated with a respective hierarchic order, A, B, C. In Fig. 1, the storage space 105 is exemplified as comprising three zones, namely a first zone associated with a first hierarchic order, A, a second zone associated with a second hierarchic order, B, and a third zone associated with a third hierarchic order, C, wherein each zone has a unique hierarchic order, A, B, C. It should be noted, though, that the storage space 105 may comprise substantially any number of zones. It is predicted, expected and/or assumed that a level of occupancy of the at least one object of the zone of the first hierarchic order, A, is higher than a level of occupancy of the at least one object of the zone of the second hierarchic order, B, which in turn is higher than a level of occupancy of the at least one object of the zone of the third hierarchic order, C, during a predetermined time interval. The hierarchic orders, A, B, C, of the zones may be set or determined in advance or be calculated/mined based on sensor data. The partition of the storage space 105 may be based on the concept of storing the most frequently accessed items in the zone(s) which is (are) easiest to reach. In other words, the most frequently accessed items may be stored closest to any receiving, staging, and/or shipping area. The partition of the storage space 105 as exemplified in Fig. 1 via zones may ensure that most frequently accessed/valuable items are closest to a staging area, thereby minimizing the travel time. Hence, the most frequently accessed items may be stored in the first zone associated with the first hierarchic order, A, the second-most frequently accessed class of items may be stored in the second zone associated with the second hierarchic order, B, etc.

The sensor system 100 in Fig. 1 further comprises a processor 140 which is connected to the sensors 110. The processor 140 is connected/coupled to each of the sensors 110 and is configured to receive information from the sensors 110. The processor 140 is configured to, via the sensors 110, determine a level of occupancy of the object(s) in the three zones of hierarchic orders A, B, C, respectively, as a function of time. The processor 140 is further configured to compare a first level of occupancy of the object(s) of the first zone of hierarchic order, A, a second level of occupancy of the object(s) of the second zone of hierarchic order, B, and a third level of occupancy of the object(s) of the third zone of hierarchic order, C. It is predicted, expected and/or assumed that the first level of occupancy is higher than the second level of occupancy, which in turn is higher than the third level of occupancy. In case of a level of occupancy of object(s) of a zone of a (lower) hierarchic order is higher than a level of occupancy of object(s) of a zone of a (higher) hierarchic order, e.g. in case the first level of occupancy of object(s) of the first zone of the first hierarchic order, A, is lower than the second level of occupancy of object(s) of the second zone of the second hierarchic order, B, albeit the first hierarchic order, A, is higher than the second hierarchic order, B, an alarm 150 of the sensor system 100, which is connected to the processor 140, is configured to generate an alarm signal. The alarm signal, which may be substantially any kind of alarm signal, message and/or sound, may be indicated to an operator and/or storage (warehouse) manager.

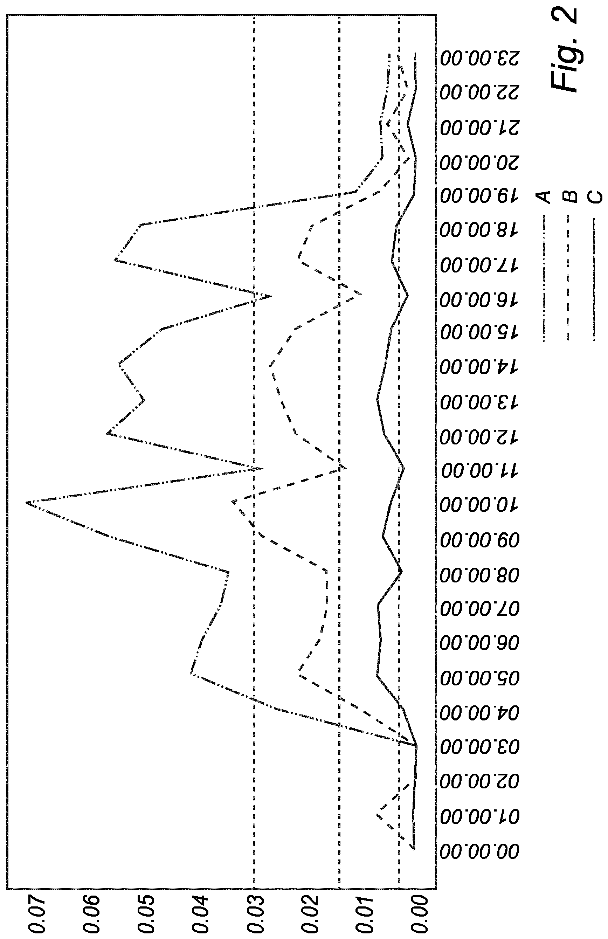

Fig. 2 schematically shows a diagram of median occupancy of object(s) in a storage space according to an exemplifying embodiment of the present invention. It should be noted that features and/or functions of the sensor system 100 are described in Fig. 1 and the associated text, and it is hereby referred to Fig. 1 and said text for an increased understanding and for reasons of reference. In Fig. 2, with the y-axis in arbitrary units, it is shown that the sensor system 100 may determine a first level of average median occupancy of object(s) in a first zone of the first hierarchic order, A, which is higher than a second level of average median occupancy of object(s) in a second zone of the second hierarchic order, B, which in turn is higher than a third level of average median occupancy of object(s) in a third zone of the third hierarchic order, C, as a function of hour of working day (over a period of 15 days). Fig. 2 hereby shows the long-term stable trend of object occupancy distributions in the first, second and third zones, following the nominal order that the first hierarchic order, A, is higher than the second hierarchic order, B, which is higher than the third hierarchic order, C. If this trend is violated, the system 100 is configured to raise a warning via its alarm. It should be noted that alternative methods and/or statistics could be used in order to determine an occupancy and violation of the zones of the respective hierarchic orders, A, B, C. For example, an indicator could be the fraction of hours that the second zone of second hierarchic order, B, has a higher average occupancy than the first zone of first hierarchic order, A, and analogously, the fraction of hours that the third zone of third hierarchic order, C, has a higher average occupancy than the second zone of second hierarchic order, B. For example, the occupancy of the second zone of the second hierarchy, B, is higher than the first zone of the first hierarchic order, A, for 27 hours (11.25%) and the occupancy of the third zone of third hierarchic order, C, is higher than the occupancy of the second zone of the second hierarchy, B, for 5 hours (2.08%).

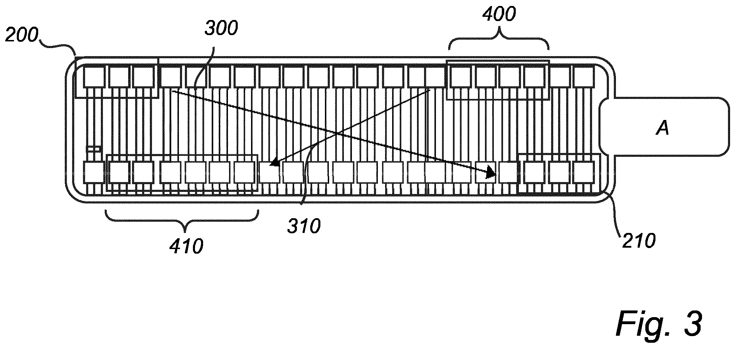

Fig. 3 schematically shows an indication of transfer of item(s) by a sensor system according to an embodiment of the present invention. It should be noted that features and/or functions of the sensor system 100 are described in Fig. 1 and the associated text, and it is hereby referred to Fig. 1 and said text for an increased understanding and for reasons of reference. According to the example of Fig. 3, the sensor system 100, via the sensors 110 and the processor 140, is configured to identify a first portion 200 of the zone associated with the first hierarchic order, A, wherein the first portion 200 has a level of occupancy of object(s) being below a first threshold, T₁. Due to its relatively low occupancy level, the first portion 200 may be denoted as a "cold spot". It will be appreciated that the position and size of the portion 200 as indicated in Fig. 3 is merely provided as an example, and there may furthermore be more than one first portion 200. Analogously, the sensor system 100 is configured to identify a second portion 210 of the zone associated with the first hierarchic order, A, wherein the second portion 210 of the zone has a level of occupancy of object(s) being above a second threshold, T₂. Due to its relatively high occupancy level, the second portion 210 may be denoted as a "hot spot". The sensor system 100 may further be configured to indicate a transfer 300 of one or more items from the first portion of the zone (the "cold spot") to the second portion of the zone (the "hot spot"). Hence, the sensor system 100 may identify a first portion 200 having a level of occupancy of object(s) below a first threshold, T₁, i.e. being relatively small, as well as a second portion 210 having a level of occupancy of object(s) being above a second threshold, T₂, i.e. being relatively high. Based on this identification, the sensor system 100 may be configured to indicate a transfer (i.e. transportation) of item(s) from the first portion 200 to the second portion 210, i.e. from the "cold spot" to the "hot spot".

Fig. 3 further discloses the embodiment of the processor 140 being configured to identify for e.g. the zone associated with the first hierarchic order, a first cluster of at least two spatially contiguous (i.e. adjacently arranged) first portions of the zone 400. Analogously, the processor 140 is configured to identify and a second cluster 410 of at least two spatially contiguous second portions of the zone. The processor 140 may further be configured to indicate a transfer 310 of item(s) from the at least a first portion of the zone to the at least a second portion of the zone as a function of one or more of property(ies) of the first cluster 400, and property(ies) 410 of the second cluster.

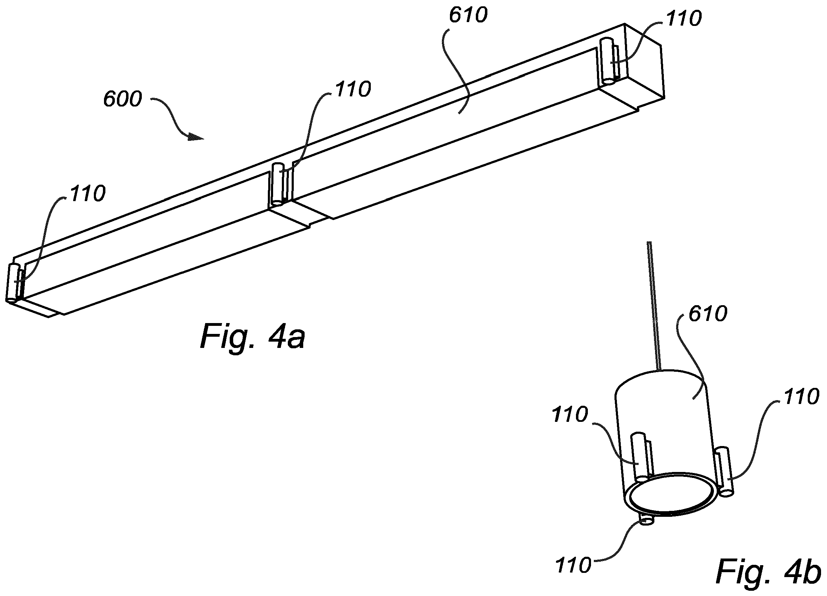

Fig. 4a schematically shows a lighting system 600. The lighting system 600 comprises a lighting device 610, which preferably comprises one or more light-emitting diodes, LEDs. The lighting system 600 further comprises a sensor system according to any one of the preceding embodiments, connected to the lighting device 610. It will be appreciated that the sensor system may have the same features and/or construction as the sensor system shown in Fig. 1. The sensor system shown in Fig. 4a comprises three sensors 110, but any number of sensors 110 may be feasible. For example, in case of a relatively large storage space, there may be a relatively large number of sensors 110. Fig. 4b discloses an alternative embodiment of the lighting device 410, comprising (three) sensors 110.

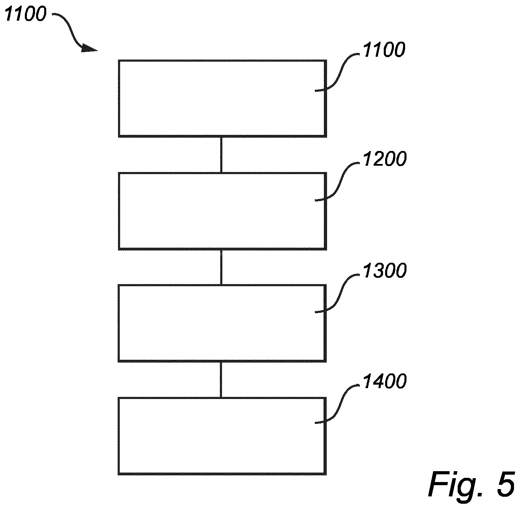

Fig. 5 schematically shows the method 1000 for monitoring a storage space comprising a plurality of items according to the second aspect of the present invention. The method 1000 comprises the step of registering 1100 occupancy of at least one object in a plurality of zones of the storage space, wherein each zone of the plurality of zones is associated with a respective hierarchic order, A, B, C, wherein a level of occupancy of the at least one object of a first zone of a first hierarchic order, A, is predicted to be higher than a level of occupancy of the at least one object of a zone of a second hierarchic order, B, during a predetermined time interval, wherein the first hierarchic order, A, is higher than the second hierarchic order, B. The method further comprises the step of determining 1200 a level of occupancy of the at least one object in at least two zones as a function of time, wherein the at least two zones comprise a first zone of the first hierarchic order, A, and a second zone of the second hierarchic order, B. The method further comprises the step of comparing 1300 a first level of occupancy of the at least one object of the first zone with a second level of occupancy of the at least one object of the second zone during a predetermined time interval. The method further comprises the step of generating 1400 an alarm signal if the first level of occupancy of at least one object of the first zone of the first hierarchic order, A, is lower than the second level of occupancy of at least one object of the second zone of the second hierarchic order, B, whilst the first hierarchic order, A, is higher than the second hierarchic order, B.

The person skilled in the art realizes that the present invention by no means is limited to the preferred embodiments described above. On the contrary, many modifications and variations are possible within the scope of the invention, as defined in claim 1. For example, the number and/or size of the plurality of zones 130, the first 200 and/or second portions 210 of the zones, etc., may vary from those shown.

## Claims

1. A sensor system (100) for monitoring a storage space comprising a plurality of items, the sensor system comprising
at least one sensor (110) configured to register occupancy of at least one object (120) in a plurality of zones (130) of the storage space, wherein each zone of the plurality of zones is associated with a respective hierarchic order, A, B, C, wherein a level of occupancy of the at least one object of a zone of a first hierarchic order, A, is predicted to be higher than a level of occupancy of the at least one object of a zone of a second hierarchic order, B, during a predetermined time interval, wherein the first hierarchic order, A, is higher than the second hierarchic order, B,
a processor (140) connected to the at least one sensor, wherein the processor is configured to, via the at least one sensor,
determine a level of occupancy of the at least one object in at least two zones, as a function of time, wherein the at least two zones comprise a first zone of the first hierarchic order, A, and a second zone of the second hierarchic order, B,
an alarm (150) connected to the processor,
**characterized in that** the processor (140) is further configured to
compare a first level of occupancy of the at least one object of the first zone with a second level of occupancy of the at least one object of the second zone, during a predetermined time interval,
and
determine an unpredicted or unexpected state in which the first level of occupancy of at least one object of the first zone of the first hierarchic order, A, is lower than the second level of occupancy of at least one object of the second zone of the second hierarchic order, B, whilst the first hierarchic order, A, is higher than the second hierarchic order, B,
wherein the alarm is configured to generate an alarm signal if the unpredicted or unexpected state is determined.

2. The sensor system according to claim 1, wherein the processor is configured to, via the at least one sensor,
identify, for at least one zone of the plurality of zones,
at least a first portion (200) of the zone having a level of occupancy of at least one object being below a first threshold, T₁, and
at least a second portion (210) of the zone having a level of occupancy of at least one object being above a second threshold, T₂,
and
indicate, for at least one zone of the plurality of zones, a transfer (300) of at least one item from the at least a first portion of the zone to the at least a second portion of the zone.

3. The sensor system according to claim 1 or 2, wherein each zone of the plurality of zones is associated with a respective hierarchic order, A, B, C, based on a predetermined setting of the plurality of zones.

4. The sensor system according to claim 1 or 2, wherein each zone of the plurality of zones is associated with a respective hierarchic order, A, B, C, based on the at least one sensor being configured to register occupancy of the at least one object in the plurality of zones of the storage space during a nominal time interval, wherein the processor is configured to, via the at least one sensor,
determine a level of occupancy of the at least one object in at least two zones as a function of time, wherein the at least two zones comprise a first zone and a second zone,
compare a first level of occupancy of the at least one object of the first zone with a second level of occupancy of the at least one object of the second zone, during the nominal time interval,
if the first level of occupancy of the at least one object of the first zone is higher than the second level of occupancy of the at least one object of the second zone, the processor being configured to
associate the first zone with a first hierarchic order, A, and
associate the second zone with a second hierarchic order,
wherein the first hierarchic order, A, is higher than the second hierarchic order, B.

5. The sensor system according to any one of the preceding claims, wherein at least one of the first threshold, T₁, and the second threshold, T₂, fulfills 1.5·σ < T₁< 2·σ and -2·σ < T₂< -1.5·σ, respectively, wherein σ is the standard deviation from the mean level of occupancy for at least one zone of the plurality of zones.

6. The sensor system according to any one of claims 1-4, wherein at least one of the first threshold, T₁, and the second threshold, T₂, is set based on at least one property of the storage space.

7. The sensor system according to any one of the preceding claims, wherein the processor is configured to
identify, for at least one zone of the plurality of zones,
a first cluster (400) of at least two spatially contiguous first portions of the zone, and
a second cluster (410) of at least two spatially contiguous second portions of the zone,
and
indicate, for at least one zone of the plurality of zones,
a transfer of at least one item from the at least a first portion of the zone to the at least a second portion of the zone as a function of at least one of
at least one property of the first cluster, and
at least one property of the second cluster.

8. The sensor system according to any one of the preceding claims, wherein the at least one sensor is a passive infra-red sensor, PIR.

9. The sensor system according to any one of the preceding claims, wherein the at least one object is a person.

10. A lighting system (600), comprising
at least one lighting device (610), and
a sensor system according to any one of the preceding claims, connected to the at least one lighting device.

11. The lighting system according to claim 10, wherein the at least one sensor is configured to control an operation of the at least one lighting device.

12. A method (1000) for monitoring a storage space comprising a plurality of items, wherein the method comprises
registering (1100) occupancy of at least one object (120) in a plurality of zones (130) of the storage space, wherein each zone of the plurality of zones is associated with a respective hierarchic order, A, B, C, wherein a level of occupancy of the at least one object of a first zone of a first hierarchic order, A, is predicted to be higher than a level of occupancy of the at least one object of a zone of a second hierarchic order, B, during a predetermined time interval, wherein the first hierarchic order, A, is higher than the second hierarchic order, B,
determining (1200) a level of occupancy of the at least one object in at least two zones as a function of time, wherein the at least two zones comprise a first zone of the first hierarchic order, A, and a second zone of the second hierarchic order, B, and
comparing (1300) a first level of occupancy of the at least one object of the first zone with a second level of occupancy of the at least one object of the second zone during a predetermined time interval,
determining an unpredicted or unexpected state in which the first level of occupancy of at least one object of the first zone of the first hierarchic order, A, is lower than the second level of occupancy of at least one object of the second zone of the second hierarchic order, B, whilst the first hierarchic order, A, is higher than the second hierarchic order, B,
generating (1400) an alarm signal if the unpredicted or unexpected state is determined.

13. The method according to claim 12, wherein, if the first level of occupancy of at least one object of the first zone of the first hierarchic order, A, is lower than the second level of occupancy of at least one object of the second zone of the second hierarchic order, B, whilst the first hierarchic order, A, is higher than the second hierarchic order, B,
identifying, for at least one zone of the plurality of zones,
at least a first portion (200) of the zone having a level of occupancy of at least one object being below a first threshold, T₁, and
at least a second portion (210) of the zone having a level of occupancy of at least one object being above a second threshold, T₂,
and
indicating, for at least one zone of the plurality of zones, a transfer of at least one item from the at least a first portion of the zone to the at least a second portion of the zone.

14. The method according to claim 12 or 13, wherein each zone of the plurality of zones is associated with a respective hierarchic order, A, B, C, based on a predetermined setting of the plurality of zones.

15. The method according to claim 12 or 13, wherein each zone of the plurality of zones is associated with a respective hierarchic order, A, B, C, based on the steps of
registering occupancy of the at least one object in the plurality of zones of the storage space during a nominal time interval,
determining a level of occupancy of the at least one object in at least two zones as a function of time,
comparing a first level of occupancy of the at least one object of the first zone with a second level of occupancy of the at least one object of the second zone, during the nominal time interval,
if the first level of occupancy of the at least one object of a first zone is higher than the second level of occupancy of the at least one object of the second zone,
associating the first zone with a first hierarchic order, A, and
associating the second zone with a second hierarchic order,
wherein the first hierarchic order, A, is higher than the second hierarchic order, B.

## Patentansprüche

1. Sensorsystem (100) zum Überwachen eines Lagerraums, umfassend eine Vielzahl von Gegenständen, das Sensorsystem umfassend
mindestens einen Sensor (110), der konfiguriert ist, um eine Belegung von mindestens einem Objekt (120) in einer Vielzahl von Zonen (130) des Lagerraums zu registrieren, wobei jede Zone der Vielzahl von Zonen einer jeweiligen hierarchischen Ordnung, A, B, C, zugeordnet ist, wobei vorhergesagt wird, dass ein Belegungsgrad des mindestens einen Objekts einer Zone einer ersten hierarchischen Ordnung, A, höher als ein Belegungsgrad des mindestens einen Objekts einer Zone einer zweiten hierarchischen Ordnung, B, innerhalb eines zuvor bestimmten Zeitintervalls sein wird, wobei die erste hierarchische Ordnung, A, höher als die zweite hierarchische Ordnung, B, ist,
einen Prozessor (140), der mit dem mindestens einen Sensor verbunden ist, wobei der Prozessor konfiguriert ist zum, über den mindestens einen Sensor,
Bestimmen eines Belegungsgrads des mindestens einen Objekts in mindestens zwei Zonen in Abhängigkeit von einer Zeit, wobei die mindestens zwei Zonen eine erste Zone der ersten hierarchischen Ordnung, A, und eine zweite Zone der zweiten hierarchischen Ordnung, B, umfassen, einen Alarm (150), der mit dem Prozessor verbunden ist,
**dadurch gekennzeichnet, dass** der Prozessor (140) ferner konfiguriert ist zum Vergleichen eines ersten Belegungsgrads des mindestens einen Objekts der ersten Zone mit einem zweiten Belegungsgrad des mindestens einen Objekts der zweiten Zone, innerhalb eines zuvor bestimmten Zeitintervalls, und
Bestimmen eines nicht vorhergesagten oder nicht erwarteten Zustands, in dem der erste Belegungsgrad von mindestens einem Objekt der ersten Zone der ersten hierarchischen Ordnung, A, niedriger als der zweite Belegungsgrad von mindestens einem Objekt der zweiten Zone der zweiten hierarchischen Ordnung, B, ist, während die erste hierarchische Ordnung, A, höher als die zweite hierarchische Ordnung, B, ist,
wobei der Alarm konfiguriert ist, um ein Alarmsignal zu erzeugen, falls der nicht vorhergesagte oder nicht erwartete Zustand bestimmt wird.

2. Sensorsystem nach Anspruch 1, wobei der Prozessor konfiguriert ist zum, über den mindestens einen Sensor,
Identifizieren, für mindestens eine Zone der Vielzahl von Zonen,
mindestens eines ersten Abschnitts (200) der Zone, der einen Belegungsgrad von mindestens einem Objekt aufweist, der unterhalb eines ersten Schwellenwerts, T₁, liegt, und
mindestens eines zweiten Abschnitts (210) der Zone, der einen Belegungsgrad von mindestens einem Objekt aufweist, der oberhalb eines zweiten Schwellenwerts, T₂, liegt, und
Angeben, für mindestens eine Zone der Vielzahl von Zonen, eines Transfers (300) von mindestens einem Gegenstand von dem mindestens einen ersten Abschnitt der Zone zu dem mindestens einen zweiten Abschnitt der Zone.

3. Sensorsystem nach Anspruch 1 oder 2, wobei jede Zone der Vielzahl von Zonen einer jeweiligen hierarchischen Ordnung, A, B, C, basierend auf einer zuvor bestimmten Einstellung der Vielzahl von Zonen zugeordnet ist.

4. Sensorsystem nach Anspruch 1 oder 2, wobei jede Zone der Vielzahl von Zonen einer jeweiligen hierarchischen Ordnung, A, B, C, basierend darauf zugeordnet ist, dass der mindestens eine Sensor konfiguriert ist, um die Belegung des mindestens einen Objekts in der Vielzahl von Zonen des Lagerraums innerhalb eines nominalen Zeitintervalls zu registrieren, wobei der Prozessor konfiguriert ist zum, über den mindestens einen Sensor,
Bestimmen eines Belegungsgrads des mindestens einen Objekts in mindestens zwei Zonen in Abhängigkeit von der Zeit, wobei die mindestens zwei Zonen eine erste Zone und eine zweite Zone umfassen,
Vergleichen eines ersten Belegungsgrads des mindestens einen Objekts der ersten Zone mit einem zweiten Belegungsgrad des mindestens einen Objekts der zweiten Zone, innerhalb des nominalen Zeitintervalls,
wobei der Prozessor, falls der erste Belegungsgrad des mindestens einen Objekts der ersten Zone höher als der zweite Belegungsgrad des mindestens einen Objekts der zweiten Zone ist, konfiguriert ist zum
Zuordnen der ersten Zone zu einer ersten hierarchischen Ordnung, A, und
Zuordnen der zweiten Zone zu einer zweiten hierarchischen Ordnung,
wobei die erste hierarchische Ordnung, A, höher als die zweite hierarchische Ordnung, B, ist.

5. Sensorsystem nach einem der vorstehenden Ansprüche, wobei mindestens einer des ersten Schwellenwerts, T₁, und des zweiten Schwellenwerts, T₂, 1,5·σ < T₁< 2·σ beziehungsweise -2.0 < T₂< -1,5·σ erfüllt, wobei σ die Standardabweichung von dem mittleren Belegungsgrad für mindestens eine Zone der Vielzahl von Zonen ist.

6. Sensorsystem nach einem der Ansprüche 1 bis 4, wobei mindestens einer des ersten Schwellenwerts, T₁, und des zweiten Schwellenwerts, T₂, basierend auf mindestens einer Eigenschaft des Lagerraums eingestellt ist.

7. Sensorsystem nach einem der vorstehenden Ansprüche, wobei der Prozessor konfiguriert ist zum
Identifizieren, für mindestens eine Zone der Vielzahl von Zonen,
eines ersten Clusters (400) von mindestens zwei räumlich aneinandergrenzenden ersten Abschnitten der Zone, und
eines zweiten Clusters (410) von mindestens zwei räumlich aneinandergrenzenden zweiten Abschnitten der Zone, und
Angeben, für mindestens eine Zone der Vielzahl von Zonen,
eines Transfers von mindestens einem Gegenstand von dem mindestens einen ersten Abschnitt der Zone zu dem mindestens einen zweiten Abschnitt der Zone in Abhängigkeit von mindestens einer von
mindestens einer Eigenschaft des ersten Clusters, und
mindestens einer Eigenschaft des zweiten Clusters.

8. Sensorsystem nach einem der vorstehenden Ansprüche, wobei der mindestens eine Sensor ein passiver Infrarotsensor, PIR, ist.

9. Sensorsystem nach einem der vorstehenden Ansprüche, wobei das mindestens eine Objekt eine Person ist.

10. Beleuchtungssystem (600), umfassend
mindestens eine Beleuchtungsvorrichtung (610), und
ein Sensorsystem nach einem der vorstehenden Ansprüche, das mit der mindestens einen Beleuchtungsvorrichtung verbunden ist.

11. Beleuchtungssystem nach Anspruch 10, wobei der mindestens eine Sensor konfiguriert ist, um einen Betrieb der mindestens einen Beleuchtungsvorrichtung zu steuern.

12. Verfahren (1000) zum Überwachen eines Lagerraums, umfassend eine Vielzahl von Gegenständen, wobei das Verfahren umfasst
Registrieren (1100) der Belegung von mindestens einem Objekt (120) in einer Vielzahl von Zonen (130) des Lagerraums, wobei jede Zone der Vielzahl von Zonen einer jeweiligen hierarchischen Ordnung, A, B, C, zugeordnet ist, wobei vorhergesagt wird, dass ein Belegungsgrad des mindestens einen Objekts einer ersten Zone einer ersten hierarchischen Ordnung, A, höher als ein Belegungsgrad des mindestens einen Objekts einer Zone einer zweiten hierarchischen Ordnung, B, innerhalb eines zuvor bestimmten Zeitintervalls sein wird, wobei die erste hierarchische Ordnung, A, höher als die zweite hierarchische Ordnung, B, ist,
Bestimmen (1200) eines Belegungsgrads des mindestens einen Objekts in mindestens zwei Zonen in Abhängigkeit von der Zeit, wobei die mindestens zwei Zonen eine erste Zone der ersten hierarchischen Ordnung, A, und eine zweite Zone der zweiten hierarchischen Ordnung, B, umfassen, und
Vergleichen (1300) eines ersten Belegungsgrads des mindestens einen Objekts der ersten Zone mit einem zweiten Belegungsgrad des mindestens einen Objekts der zweiten Zone innerhalb eines zuvor bestimmten Zeitintervalls,
Bestimmen eines nicht vorhergesagten oder nicht erwarteten Zustands, in dem der erste Belegungsgrad von mindestens einem Objekt der ersten Zone der ersten hierarchischen Ordnung, A, niedriger als der zweite Belegungsgrad von mindestens einem Objekt der zweiten Zone der zweiten hierarchischen Ordnung, B, ist, während die erste hierarchische Ordnung, A, höher als die zweite hierarchische Ordnung, B, ist,
Erzeugen (1400) eines Alarmsignals, falls der nicht vorhergesagte oder nicht erwartete Zustand bestimmt wird.

13. Verfahren nach Anspruch 12, wobei, falls der erste Belegungsgrad von mindestens einem Objekt der ersten Zone der ersten hierarchischen Ordnung, A, niedriger als der zweite Belegungsgrad von mindestens einem Objekt der zweiten Zone der zweiten hierarchischen Ordnung, B, ist, während die erste hierarchische Ordnung, A, höher als die zweite hierarchische Ordnung, B, ist,
Identifizieren, für mindestens eine Zone der Vielzahl von Zonen,
mindestens eines ersten Abschnitts (200) der Zone, der einen Belegungsgrad von mindestens einem Objekt aufweist, der unterhalb eines ersten Schwellenwerts, T₁, liegt, und
mindestens eines zweiten Abschnitts (210) der Zone, der einen Belegungsgrad von mindestens einem Objekt aufweist, der oberhalb eines zweiten Schwellenwerts, T₂, liegt, und
Angeben, für mindestens eine Zone der Vielzahl von Zonen, eines Transfers von mindestens einem Gegenstand von dem mindestens einen ersten Abschnitt der Zone zu dem mindestens einen zweiten Abschnitt der Zone.

14. Verfahren nach Anspruch 12 oder 13, wobei jede Zone der Vielzahl von Zonen einer jeweiligen hierarchischen Ordnung, A, B, C, basierend auf einer zuvor bestimmten Einstellung der Vielzahl von Zonen zugeordnet ist.

15. Verfahren nach Anspruch 12 oder 13, wobei jede Zone der Vielzahl von Zonen einer jeweiligen hierarchischen Ordnung, A, B, C, zugeordnet ist, basierend auf den Schritten
Registrieren der Belegung des mindestens einen Objekts in der Vielzahl von Zonen des Lagerraums innerhalb eines nominalen Zeitintervalls,
Bestimmen eines Belegungsgrades des mindestens einen Objekts in mindestens zwei Zonen in Abhängigkeit von der Zeit,
Vergleichen eines ersten Belegungsgrads des mindestens einen Objekts der ersten Zone mit einem zweiten Belegungsgrad des mindestens einen Objekts der zweiten Zone, innerhalb des nominalen Zeitintervalls,
falls der erste Belegungsgrad des mindestens einen Objekts einer ersten Zone höher als der zweite Belegungsgrad des mindestens einen Objekts der zweiten Zone ist,
Zuordnen der ersten Zone zu einer ersten hierarchischen Ordnung, A, und
Zuordnen der zweiten Zone zu einer zweiten hierarchischen Ordnung,
wobei die erste hierarchische Ordnung, A, höher als die zweite hierarchische Ordnung, B, ist.

## Revendications

1. Système de capteur (100) destiné à surveiller un espace de stockage comprenant une pluralité d'articles, le système de capteur comprenant
au moins un capteur (110) configuré pour enregistrer l'occupation d'au moins un objet (120) dans une pluralité de zones (130) de l'espace de stockage, dans lequel chaque zone de la pluralité de zones est associée à un ordre hiérarchique respectif, A, B, C, dans lequel un niveau d'occupation de l'au moins un objet d'une zone d'un premier ordre hiérarchique, A, est prédit pour être supérieur à un niveau d'occupation de l'au moins un objet d'une zone d'un second ordre hiérarchique, B, pendant un intervalle de temps prédéterminé, dans lequel le premier ordre hiérarchique, A, est supérieur au second ordre hiérarchique, B,
un processeur (140) connecté à l'au moins un capteur, dans lequel le processeur est configuré pour, par l'intermédiaire de l'au moins un capteur,
déterminer un niveau d'occupation de l'au moins un objet dans au moins deux zones, en fonction du temps, dans lequel les au moins deux zones comprennent une première zone du premier ordre hiérarchique, A, et une seconde zone du second ordre hiérarchique, B, une alarme (150) connectée au processeur,
**caractérisé en ce que** le processeur (140) est en outre configuré pour comparer un premier niveau d'occupation de l'au moins un objet de la première zone avec un second niveau d'occupation de l'au moins un objet de la seconde zone, pendant un intervalle de temps prédéterminé, et
déterminer un état imprévu ou inattendu dans lequel le premier niveau d'occupation d'au moins un objet de la première zone du premier ordre hiérarchique, A, est inférieur au second niveau d'occupation d'au moins un objet de la seconde zone du second ordre hiérarchique, B, alors que le premier ordre hiérarchique, A, est supérieur au second ordre hiérarchique, B,
dans lequel l'alarme est configurée pour générer un signal d'alarme si l'état imprévu ou inattendu est déterminé.

2. Système de capteur selon la revendication 1, dans lequel le processeur est configuré pour, par l'intermédiaire de l'au moins un capteur,
identifier, pour au moins une zone de la pluralité de zones,
au moins une première partie (200) de la zone ayant un niveau d'occupation d'au moins un objet étant inférieur à un premier seuil, T₁, et
au moins une seconde partie (210) de la zone ayant un niveau d'occupation d'au moins un objet étant au-dessus d'un second seuil, T₂, et
indiquer, pour au moins une zone de la pluralité de zones, un transfert (300) d'au moins un article de l'au moins une première partie de la zone à l'au moins une seconde partie de la zone.

3. Système de capteur selon la revendication 1 ou 2, dans lequel chaque zone de la pluralité de zones est associée à un ordre hiérarchique respectif, A, B, C, sur la base d'un réglage prédéterminé de la pluralité de zones.

4. Système de capteur selon la revendication 1 ou 2, dans lequel chaque zone de la pluralité de zones est associée à un ordre hiérarchique respectif, A, B, C, sur la base de l'au moins un capteur étant configuré pour enregistrer l'occupation de l'au moins un objet dans la pluralité de zones de l'espace de stockage pendant un intervalle de temps nominal, dans lequel le processeur est configuré pour, par l'intermédiaire de l'au moins un capteur,
déterminer un niveau d'occupation de l'au moins un objet dans au moins deux zones en fonction du temps, dans lequel les au moins deux zones comprennent une première zone et une seconde zone,
comparer un premier niveau d'occupation de l'au moins un objet de la première zone avec un second niveau d'occupation de l'au moins un objet de la seconde zone, pendant l'intervalle de temps nominal,
si le premier niveau d'occupation de l'au moins un objet de la première zone est supérieur au second niveau d'occupation de l'au moins un objet de la seconde zone, le processeur étant configuré pour
associer la première zone à un premier ordre hiérarchique, A, et
associer la seconde zone à un second ordre hiérarchique,
dans lequel le premier ordre hiérarchique, A, est supérieur au second ordre hiérarchique, B.

5. Système de capteur selon l'une quelconque des revendications précédentes, dans lequel au moins l'un parmi le premier seuil, T₁, et le second seuil, T₂, respecte 1,5 · σ < T₁ < 2 · σ et -2 · σ < T₂ < -1,5 · σ, respectivement, où σ est l'écart-type par rapport au niveau moyen d'occupation pour au moins une zone de la pluralité de zones.

6. Système de capteur selon l'une quelconque des revendications 1 à 4, dans lequel au moins l'un parmi le premier seuil, T₁, et le second seuil, T₂, est réglé sur la base d'au moins une propriété de l'espace de stockage.

7. Système de capteur selon l'une quelconque des revendications précédentes, dans lequel le processeur est configuré pour
identifier, pour au moins une zone de la pluralité de zones,
une première grappe (400) d'au moins deux premières parties spatialement contiguës de la zone, et
une seconde grappe (410) d'au moins deux secondes parties spatialement contiguës de la zone, et
indiquer, pour au moins une zone de la pluralité de zones,
un transfert d'au moins un article de l'au moins une première partie de la zone à l'au moins une seconde partie de la zone en fonction d'au moins l'une parmi
au moins une propriété de la première grappe, et
au moins une propriété de la seconde grappe.

8. Système de capteur selon l'une quelconque des revendications précédentes, dans lequel l'au moins un capteur est un capteur infrarouge passif, PIR.

9. Système de capteur selon l'une quelconque des revendications précédentes, dans lequel l'au moins un objet est une personne.

10. Système d'éclairage (600), comprenant
au moins un dispositif d'éclairage (610), et
un système de capteur selon l'une quelconque des revendications précédentes, connecté à l'au moins un dispositif d'éclairage.

11. Système d'éclairage selon la revendication 10, dans lequel l'au moins un capteur est configuré pour commander un fonctionnement de l'au moins un dispositif d'éclairage.

12. Procédé (1000) destiné à surveiller un espace de stockage comprenant une pluralité d'articles, dans lequel le procédé comprend
l'enregistrement (1100) d'occupation d'au moins un objet (120) dans une pluralité de zones (130) de l'espace de stockage, dans lequel chaque zone de la pluralité de zones est associée à un ordre hiérarchique respectif, A, B, C, dans lequel un niveau d'occupation de l'au moins un objet d'une première zone d'un premier ordre hiérarchique, A, est prédit pour être supérieur à un niveau d'occupation de l'au moins un objet d'une zone d'un second ordre hiérarchique, B, pendant un intervalle de temps prédéterminé, dans lequel le premier ordre hiérarchique, A, est supérieur au second ordre hiérarchique, B,
la détermination (1200) d'un niveau d'occupation de l'au moins un objet dans au moins deux zones en fonction du temps, dans lequel les au moins deux zones comprennent une première zone du premier ordre hiérarchique, A, et une seconde zone du second ordre hiérarchique, B, et
la comparaison (1300) d'un premier niveau d'occupation de l'au moins un objet de la première zone avec un second niveau d'occupation de l'au moins un objet de la seconde zone pendant un intervalle de temps prédéterminé,
la détermination d'un état imprévu ou inattendu dans lequel le premier niveau d'occupation d'au moins un objet de la première zone du premier ordre hiérarchique, A, est inférieur au second niveau d'occupation d'au moins un objet de la seconde zone du second ordre hiérarchique, B, alors que le premier ordre hiérarchique, A, est supérieur au second ordre hiérarchique, B,
la génération (1400) d'un signal d'alarme si l'état imprévu ou inattendu est déterminé.

13. Procédé selon la revendication 12, dans lequel, si le premier niveau d'occupation d'au moins un objet de la première zone du premier ordre hiérarchique, A, est inférieur au second niveau d'occupation d'au moins un objet de la seconde zone du second ordre hiérarchique, B, alors que le premier ordre hiérarchique, A, est supérieur au second ordre hiérarchique, B,
l'identification, pour au moins une zone de la pluralité de zones,
d'au moins une première partie (200) de la zone ayant un niveau d'occupation d'au moins un objet étant inférieur à un premier seuil, T₁, et
d'au moins une seconde partie (210) de la zone ayant un niveau d'occupation d'au moins un objet étant au-dessus d'un second seuil, T₂, et
l'indication, pour au moins une zone de la pluralité de zones, d'un transfert d'au moins un article de l'au moins une première partie de la zone à l'au moins une seconde partie de la zone.

14. Procédé selon la revendication 12 ou 13, dans lequel chaque zone de la pluralité de zones est associée à un ordre hiérarchique respectif, A, B, C, sur la base d'un réglage prédéterminé de la pluralité de zones.

15. Procédé selon la revendication 12 ou 13, dans lequel chaque zone de la pluralité de zones est associée à un ordre hiérarchique respectif, A, B, C, sur la base des étapes consistant à
enregistrer une occupation de l'au moins un objet dans la pluralité de zones de l'espace de stockage pendant un intervalle de temps nominal,
déterminer un niveau d'occupation de l'au moins un objet dans au moins deux zones en fonction du temps,
comparer un premier niveau d'occupation de l'au moins un objet de la première zone avec un second niveau d'occupation de l'au moins un objet de la seconde zone, pendant l'intervalle de temps nominal,
si le premier niveau d'occupation de l'au moins un objet d'une première zone est supérieur au second niveau d'occupation de l'au moins un objet de la seconde zone,
associer la première zone à un premier ordre hiérarchique, A, et
associer la seconde zone à un second ordre hiérarchique,
dans lequel le premier ordre hiérarchique, A, est supérieur au second ordre hiérarchique, B.
